**Europäisches Patentamt**

**European Patent Office**

**Office européen des brevets**

(11) Veröffentlichungsnummer: **0 503 278 A1**

## EUROPÄISCHE PATENTANMELDUNG

(21) Anmeldenummer: **92102123.4**

(51) Int. Cl.5: **C03C 21/00**, G02B 6/12

(22) Anmeldetag: **08.02.92**

(30) Priorität: **15.03.91 DE 4108424**

(43) Veröffentlichungstag der Anmeldung:
**16.09.92 Patentblatt 92/38**

(84) Benannte Vertragsstaaten:
**DE FR GB**

(71) Anmelder: **Bodenseewerk Gerätetechnik GmbH**
**Alte Nussdorfer Strasse 15 Postfach 1120**
**W-7770 Überlingen/Bodensee(DE)**

(72) Erfinder: **Langner, Klaus**
**Alter Dorfstrasse 61**
**W-7770 Überlingen 12(DE)**
Erfinder: **Plocher, Erich**
**Waldweg 60**
**W-7772 Uhldingen 2(DE)**
Erfinder: **Froning, Edilbert**
**Bodanstrasse 23**
**W-7772 Oberuhldingen(DE)**

(74) Vertreter: **Wolgast, Rudolf, Dipl.-Chem. Dr. et al**
**Dipl.-Phys. Jürgen Weisse Dipl.Chem. Dr. Rudolf Wolgast Bökenbusch 41 Postfach 11 03 86**
**W-5620 Velbert 11 Langenberg(DE)**

(54) Verfahren und Vorrichtung zur Herstellung von optischen Strukturen in Platten.

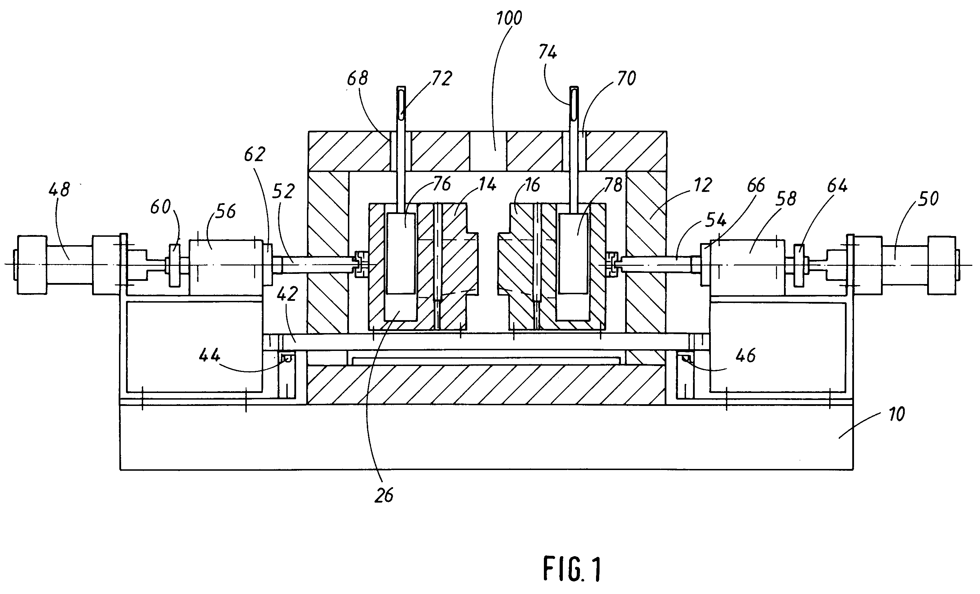

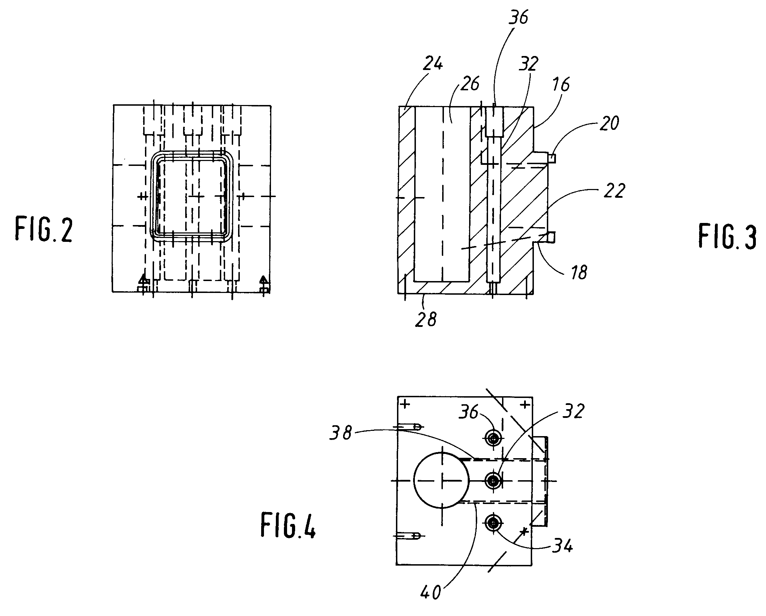

(57) Zur Herstellung von optischen Strukturen in planparallelen Platten durch feldunterstützten Ionenaustausch wird die mit einer Maske versehene Platte (in Fig. 1 und 2 nicht dargestellt) in vertikaler Anordnung zwischen Haltekörpern (14,16) gehalten, die Hohlräume (22) aufweisen, welche zu der Platte hin offen sind und an die Oberfläche der Platte angrenzen. Die Hohlräume (22) werden mit einer Salzschmelze gefüllt. Zwischen den Haltekörpern (14,16) wird eine elektrische Spannung angelegt. Zur Erzielung eines guten Durchsatzes und um eine Automatisierung dieses Vorganges zu ermöglichen, werden die Haltekörper (14,16) bei aufeinanderfolgender Behandlung verschiedener Platten ständig im beheizten Zustand gehalten. Zum Wechseln aufeinanderfolgender Platten wird die Salzschmelze aus den offenen Hohlräumen (22) in Kammern (26) in den Haltekörpern (14,16) geleitet. Die Haltekörper (14,16) werden dann auseinandergefahren, wobei die behandelte Platte mittels einer Greifvorrichtung herausgezogen wird. Die zu behandelnde Platte zwischen die auseinandergefahrenen Haltekörper (14,16) gebracht und zunächst ohne Kontakt mit den Haltekörpern (14,16) durch diese Haltekörper aufgeheizt. Nach der Aufheizung der Platte werden die Haltekörper (14,16) wieder zusammengefahren, so daß sie die dicht an deren Oberfläche anliegen und die Platte zwischen sich halten. Die offenen Hohlräume (22) werden zur Durchführung des feldunterstützten Ionenaustauschs wieder mit Salzschmelze aus den Kammern (26) gefüllt. Es wird auch eine Vorrichtung zur Durchführung dieses Verfahrens beschrieben.

FIG.3

EP 0 503 278 A1

FIG. 1

2

Die Erfindung betrifft ein Verfahren zur Herstellung von optischen Strukturen in planparallelen Platten durch feldunterstützten Ionenaustausch, bei welchem

(a) die mit einer Maske versehene Platte in vertikaler Anordnung zwischen Haltekörpern gehalten wird, die Hohlräume aufweisen, welche zu der Platte hin offen sind und an di Oberfläche der Platte angrenzen,

(b) die Hohlräume mit einer Salzschmelze gefüllt werden und

(c) zwischen den Haltekörpern eine elektrische Spannung zur Erzeugung eines quer zu der Platte verlaufenden elektrischen Feldes angelegt wird.

## Zugrundeliegender Stand der Technik

Durch die EP-A-0 326 920 ist eine Vorrichtung zur Herstellung von optischen Strukturen wie Wellenleitern in planparallelen Glasplatten bekannt. Dabei sollen in den planparallelen Glasplatten durch Ionenaustausch aus einer Salzschmelze Zonen mit erhöhtem Brechungsindex als optische Wellenleiter o. dgl. erzeugt werden. Zu diesem Zweck ist die mit einer Maske versehene Platte zwischen zwei Haltekörper aus Metall eingespannt. Die Haltekörper bilden beiderseits der Platte Hohlräume, die zu der Platte hin offen sind. Die Hohlräume sind von geschlossenen Dichtflächen umgeben, die an der Platte anliegen. Vorratsbehälter für Salzschmelze sind über Füllzuleitungen mit den unteren Enden der Hohlräume verbunden. Von den oberen Enden der Hohlräume gehen Entlüftungsleitungen ab. Die Hohlräume sind dabei nach oben hin offene Bohrungen der Haltekörper. Die Haltekörper sind durch eine Klemmvorrichtung, die Tellerfedern enthält, mit der Platte zusammengeklemmt. Durch Anlegen einer elektrischen Spannung an die metallischen Haltekörper wird ein elektrisches Feld erzeugt, durch das der Ionenaustausch unterstützt wird.

Die gesamte Anordnung muß auf eine recht hohe Temperatur gebracht werden, bei welcher die Salzschmelze flüssig ist und der Ionenaustausch stattfindet. Dabei darf an der Glasplatte praktisch kein lokaler Wärmeabfluß stattfinden, weil sonst Spannungen in der Glasplatte auftreten und die Glasplatte springt. Die Druckschrift enthält keine Offenbarung darüber, wie das bewerkstelligt werden soll. In der Praxis wird die in der Druckschrift beschriebene Anordnung in einen Ofen gesetzt und langsam auf die gewünschte Temperatur aufgeheizt, bei der das in die Vorratsbehälter eingegebene Salz schmilzt. Zum Wechseln der Glasplatten muß dann der Ofen und die gesamte Anordnung wieder abgekühlt werden, so daß die Klemmvorrichtung gelöst und die behandelte Platte durch eine neue unbehandelte Platte ersetzt werden kann. Diese nächstliegende Prozedur ist recht langwierig.

Ein ähnliches Verfahren zur Herstellung von Wellenleitern auf einem Glassubstrat durch Ionenaustausch zeigt die EP-A-0 356 644.

## Offenbarung der Erfindung

Der Erfindung liegt die Aufgabe zugrunde, ein Verfahren der eingangs definierten Art und eine Vorrichtung zur Ausübung des Verfahrens so auszugestalten, daß die zur Herstellung einer optischen Struktur auf einem Substrat erforderliche Zeit gegenüber dem bekannten Verfahren wesentlich verkürzt wird.

Insbesondere soll das Verfahren so ausgestaltet werden, daß es auf einfache Weise automatisierbar ist.

Erfindungsgemäß wird diese Aufgabe dadurch gelöst, daß

(d) die Haltekörper bei aufeinanderfolgender Behandlung verschiedener Platten ständig im beheizten Zustand gehalten werden,

(e) zum Wechseln aufeinanderfolgender Platten die Salzschmelze aus den offenen Hohlräumen in Kammern in den Haltekörpern geleitet wird,

(f) die Haltekörper dann auseinandergefahren werden, wobei die behandelte Platte mittels einer Greifvorrichtung herausgezogen wird

(g) die zu behandelnde Platte zwischen die auseinandergefahrenen Haltekörper gebracht und zunächst ohne Kontakt mit den Haltekörpern durch diese Haltekörper aufgeheizt wird,

(h) nach der Aufheizung der Platte die Haltekörper wieder zusammengefahren werden, so daß sie dicht an deren Oberfläche anliegen und die Platte zwischen sich halten, und

(i) die offenen Hohlräume zur Durchführung des feldunterstützten Ionenaustauschs wieder mit Salzschmelze aus den Kammern gefüllt werden.

Bei dem erfindungsgemäßen Verfahren ist somit keine zwischenzeitliche Abkühlung der Apparatur für den Plattenwechsel erforderlich. Nach Ableiten der Salzschmelze werden die Haltekörper im heißen Zustand auseinandergefahren. Die Salzschmelze wurde vorher abgeleitet und die behandelte Platte von einer Greifvorrichtung erfaßt. Die behandelte Platte wird herausgezogen. Die neue, zu behandelnde Platte wird zwischen die noch heißen Haltekörper aber im Abstand von diesen eingebracht. Dann wird die Platte durch Wärmestrahlung auf im wesentlichen die Temperatur der Haltekörper erhitzt. Schließlich können die Haltekörper zusammengefahren werden und die Platte fest zwischen sich halten, ohne daß an der Platte unzulässige thermische Spannungen auftreten. Die noch flüssige Salzschmelze fließt zurück in die Hohlräume und der Ionenaustausch kann mit der neuen Platte durchgeführt werden. Es hat sich gezeigt, daß dieses Verfahren durchführbar ist, ohne daß eine unzulässige Beanspruchung der Platten erfolgt. Der Durchsatz einer solchen Apparatur wird gegenüber der bekannten Apparatur wesentlich erhöht.

Der Energieverbrauch wird erheblich vermindert, da keine Abkühlung und Wiederaufheizung der Apparatur erforderlich ist. Das erfindungsgemäße Verfahren kann auch leicht automatisiert werden.

Bei einer Vorrichtung zur Durchführung des beschriebenen Verfahrens enthaltend ein Paar von auseinander- und zusammenfahrbarer Haltekörper mit einander zugewandten planen Halteflächen, in denen ein Hohlraum zur Aufnahme von Salzschmelze gebildet ist, sind erfindungsgemäß die Haltekörper durch in den Haltekörpern sitzende Heizelemente direkt beheizbar. Dabei sind die Haltekörper von einem wärmeisolierenden Gehäuse umgeben, das im Bereich zwischen den Haltekörpern und quer zu deren Stellrichtung einen Einführschlitz zum Einführen und Herausnehmen der Platten aufweist. Die Haltekörper sind durch eine außerhalb des Gehäuses angeordnete Stellvorrichtung über durch die Gehäusewandung hindurchgeführte Übertragungsglieder auseinander- und zusammenfahrbar. Um den Wärmeübergang zwischen Greifvorrichtung und Platte zu verringern und damit das Auftreten unzulässiger thermischer Spannungen zu verhindern greift die Greifvorrichtung über Schneiden auf gegenüberliegenden Seiten an den Platten an.

Ausgestaltungen der Vorrichtung sind Gegenstand weiterer Unteransprüche.

Ein Ausführungsbeispiel der Erfindung ist nachstehend unter Bezugnahme auf die zugehörigen Zeichnungen näher erläutert:

## Kurze Beschreibung der Zeichnungen

Fig.1      ist ein Schnitt durch eine Apparatur zur Herstellung von optischen Strukturen in planparallelen Platten durch feldunterstützten Ionenaustausch.

Fig.2      ist eine Ansicht eines Haltekörpers von der Platte her gesehen.

Fig.3      ist ein Vertikalschnitt des Haltekörpers.

Fig.4      ist eine Draufsicht des Haltekörpers.

Fig.5      zeigt eine Hub- und Senkvorrichtung zur Bewegung eines Verdrängungskörpers, durch welchen Schmelze in den Hohlraum des Haltekörpers gedrückt oder aus diesem abgeleitet werden kann.

Fig.6      zeigt die Greifvorrichtung, durch welche Platten in die Apparatur eingesetzt und aus dieser wieder herausgenommen werden können.

Fig.7      zeigt einen Schnitt längs der Linie A - B von Fig.6.

Fig.8      ist eine vergrößerte Darstellung der Greifbacken bei der Greifvorrichtung von Fig.6.

## Bevorzugte Ausführung der Erfindung

Auf einem Gestell 10 sitzt ein wärmeisolierendes Gehäuse 12. In dem Gehäuse 12 sind zwei Haltekörper 14 und 16 angeordnet. Ein solcher Haltekörper 14 ist in Fig.2 bis 4 im einzelnen dargestellt.

Der Haltekörper 14 ist im wesentlichen quaderförmig. An seiner der Platte zugewandten, vertikalen Fläche 16 ist ein rechteckiger Vorsprung 18 vorgesehen. Eine längs des Randes des Vorsprungs 18 verlaufende, im wesentlichen rechteckige Dichtung 20 bildet einen Hohlraum 22 innerhalb der Dichtung 20. Von der Oberseite 24 des Haltekörpers 14 aus erstreckt sich eine Sacklochbohrung 26 von relativ großem Durchmesser bis nahe an die Unterseite 28. Zwischen der Sacklochbohrung 26 und der Fläche 16 sind drei Bohrungen 30, 32 und 34 von relativ kleinem Durchmesser parallel zu der Fläche 16 vorgesehen. Diese Bohrungen 30, 32 und 34 nehmen Heizelemente 36 (Fig.3) auf. Durch diese Heizelemente 36 werden die Haltekörper 14 und 16 direkt beheizt. Die Haltekörper 14 und 16 bestehen aus einem gut wärmeleitenden Material wie Aluminium. Dadurch ist eine gleichmäßige Temperaturverteilung in dem gesamten Haltekörper 14 bzw. 16 gewährleistet. Ein Paar von Zulaufbohrungen bzw. Ablaufbohrungen 38 und 40 erstrecken sich in einer horizontalen Ebene von dem unteren Rand des Hohlraumes 22 zu der Sacklochbohrung 26. Die Zulaufbohrungen bzw. Ablaufbohrungen 38 und 40 verlaufen zwischen den Bohrungen 30 und 32 bzw. 32 und 34 hindurch.

Der Haltekörper 16 ist in gleicher Weise ausgebildet wie der Haltekörper 14 aber um 180° verdreht angeordnet. Die Sacklochbohrung 26 dient bei jedem Haltekörper 14 und 16 als Vorratsbehälter für eine Salzschmelze, die für den Ionenaustausch benutzt wird.

Jeder der Haltekörper sitzt auf einem Paar von Vierkantrohren 42. In Fig.1 ist nur eines dieser Vierkantrohre zu sehen. Die Vierkantrohre 42 sind mit ihren Enden durch die Stirnwände des Gehäuses 12 hindurchgeführt und auf Keramikrollen 44 und 46 gelagert. Dadurch ist jeder der Haltekörper leicht geradbeweglich geführt. Diese Anordnung hat den Vorteil, daß die Führung der Haltekörper 14 und 16 außerhalb des wärmeisolierenden Gehäuses 12 praktisch bei Raumtemperatur erfolgt. Die heiße Salzschmelze hat nämlich die unangenehme Eigenschaft, zu "kriechen". Sie könnte dann leicht zu einer innerhalb des Gehäuses 12 vorgesehenen Lagerung gelangen und die Beweglichkeit der Haltekörper 14 und 16 beeinträchtigen. Zu den Keramikrollen 44 und 46 kann die Schmelze jedoch nicht gelangen, da sie erstarrt wäre, bevor sie dorthin gelangt.

Die Haltekörper 14 und 16 sind durch Pneumatikzylinder 48 bzw. 50 auseinander- und zusammenfahrbar. Die Pneumatikzylinder 48 und 50 sind ebenfalls außerhalb des Gehäuses 12 angeordnet. Die Hubbewegung der Pneumatikzylinder 48 und 50 wird über Schubstangen 52 bzw. 54 auf die Haltekörper übertragen. Die Schubstangen 52 und 54 sind aus Chromstahl wegen dessen schlechter Wärmeleitfähigkeit hergestellt. Die Schubstangen 52 und 54 sind durch Messingblöcke 56 bzw. 58 hindurchgeführt. Auf der Schubstange 52 sitzen zu beiden Seiten des Messingblocks 56 einstellbare Muttern 60 und 62. Auf der Schubstange 54 sitzen zu beiden Seiten des Messingblocks 58 einstellbare Muttern 64 und 66. Die Muttern 60, 62, 64 und 66 begrenzen den Hub der Pneumatikzylinder 48 bzw. 50 und damit der Haltekörper 14 bzw. 16. Die Verwendung von Pneumatikzylindern 48 und 50 als Stellmotore gestattet es, die Kraft, mit welcher die Haltekörper 14 und 16 an der Platte anliegen, über den Druck feinfühlig zu regulieren. Der Druck muß so groß sein, daß die Hohlräume 22 beim Anliegen der Haltekörper 14 und 16 an einer Platte für die Schmelze dicht sind, daß aber andererseits die Platte nicht unnötig stark gedrückt und womöglich beschädigt wird. Bei einer praktischen Ausführung der Apparatur wurde mit einer Flächenpressung von 0,5 N/mm² ein Austreten von Schmelze verhindert. Dazu war eine Andruckkraft von 500 N erforderlich. Diese wurden schon mit einem Luftdruck von 3 bar in den Pneumatikzylindern 48 und 50 erreicht.

Auf der Oberseite weist das Gehäuse 12 zwei Öffnungen 68 und 70 auf. Diese Öffnungen 68 und 70 fluchten im wesentlichen mit den Sacklochbohrungen 26 (Fig.3 und 4) der Haltekörper 14 bzw. 16. Durch die Öffnungen 68 und 70 ragen Zugglieder 72 bzw. 74, an denen Verdrängungskörper 76 bzw. 78 hängen. Die Verdrängungskörper 76 und 78 sind mit Spiel in den Sacklochbohrungen 22 der Haltekörper 14 bzw. 16 geführt.

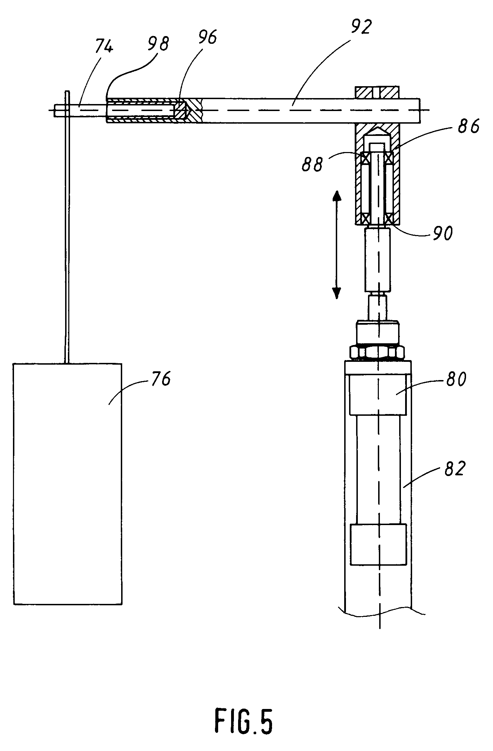

Eine Hub- und Senkvorrichtung für einen solchen Verdrängungskörper ist in Fig.5 in vergrößertem Maßstab dargestellt.

Die Hub- und Senkvorrichtung enthält einen Pneumatikzylinder 80. Der Pneumatikzylinder 80 sitzt mit vertikaler Achse in einer Halterung 82. Mit 84 ist eine Kolbenstange des Pneumatikzylinders 80 bezeichnet. Auf der Kolbenstange 84 ist ein Schwenkkopf 86 über Kugellager 88 und 90 um die vertikale Achse schwenkbar gelagert. In dem Schwenkkopf sitzt ein waagerechter Ausleger 92. An dem Ende des Auslegers 92 ist der Verdrängungskörper 76 über das Zugglied 72 angehängt. Das Zugglied 72 trägt an seinem oberen Ende einen Stift 94. Der Stift 94 ist über eine Buchse 96 aus Hartgewebe, die in einer Bohrung 98 in der Stirnfläche des Auslegers 92 sitzt, mit dem Ausleger 92 verbunden. Dadurch ist der Verdrängungskörper 76 gegenüber dem Ausleger 92 und der Hub- und Senkvorrichtung elektrisch isoliert. Die Schwenkbarkeit des Auslegers 92 mit dem kugelgelagerten Schwenkkopf 86 gestattet es dem Verdrängungskörper 76, den Bewegungen des Haltekörpers 14 zu folgen. Der untere Teil des Pneumatikzylinders 80 ist mit Öl gefüllt. Dadurch wird ein langsames und ruckfreies Absenken erreicht. Öl läßt sich besser drosseln als Luft. Der Pneumatikzylinder 80 macht einen solchen Hub, daß er den Verdrängungskörper vom Boden der Sacklochbohrung 26 bis über die Zulaufbohrungen bzw. Ablaufbohrungen 38, 40 anhebt.

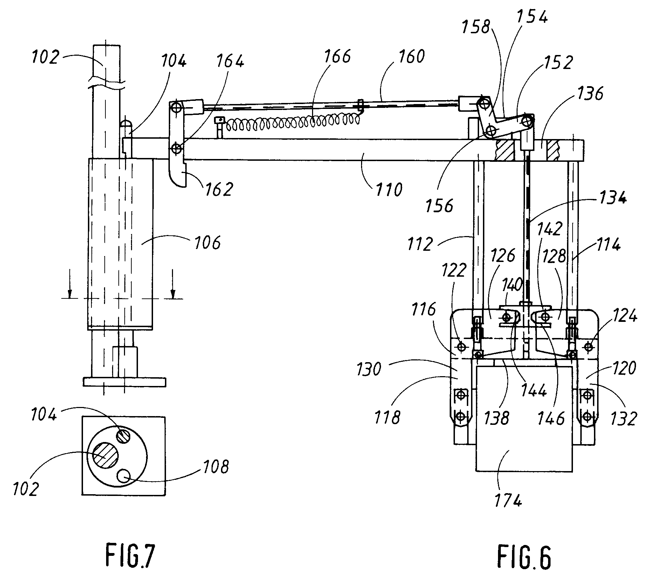

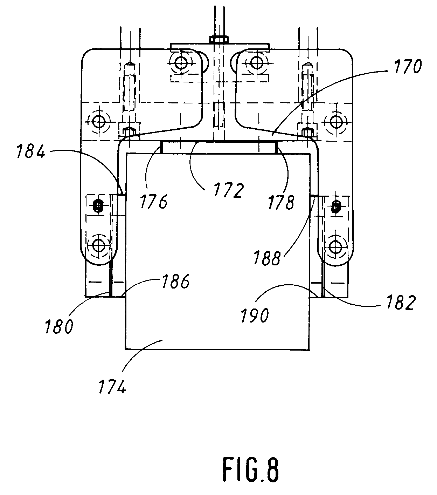

Das Gehäuse 12 weist auf der Oberseite weiterhin einen Schlitz 100 auf. Der Schlitz 100 erstreckt sich quer zu der Hubrichtung der Haltekörper 14 und 16 etwa in der Symmetrieebene zwischen den Haltekörpern 14 und 16. Durch diesen Schlitz kann eine zu behandelnde planparallele Platte, üblicherweise eine Glasplatte, in eine Position zwischen den Haltekörpern 14 und 16 gebracht und nach der Behandlung wieder herausgezogen werden. Das geschieht mittels einer Greifvorrichtung, die in den Figuren 6 bis 8 im einzelnen dargestellt ist.

Die Greifvorrichtung ist an einer Säule 102 vertikal beweglich geführt. Eine Führungssäule 104 von kleinerem Durchmesser sichert die Greifvorrichtung gegen Verdrehung. Die Führungssäule 104 ist kürzer als die Säule 102. Die Greifvorrichtung weist einen Griffteil 106 auf. Der Griffteil 106 ist mit entsprechenden Bohrungen auf der Säule 102 und der Führungssäule 104 vertikal verschiebbar geführt. Der Griffteil 106 weist eine weitere Bohrung 108 auf. Der Griffteil 106 kann nach oben über das obere Ende der Führungssäule 104 angehoben und dann verschwenkt werden. In einer definierten, verschwenkten Winkellage kann der Griffteil 106 dann wieder abgesenkt werden, wobei die Führungssäule 104 dann in der Bohrung 108 geführt ist.

An dem Griffteil 106 sitzt eine Traverse 110. Vom Ende der Traverse 110 erstrecken sich zwei parallele Stangen 112 und 114 nach unten. Am unteren Ende der Stangen sitzt ein Querstück 116. Zwei L-förmige Greifbacken 118 und 120 sind an dem Querstück 116 um Schwenkachsen 122 bzw. 124 schwenkbar angelenkt. Die Greifbacken 118 und 120 haben gegeneinandergerichtete, im wesentlichen waagerechte Schenkel 126 bzw. 128 und im wesentlichen vertikal nach unten gerichtete Schenkel 130 bzw. 132. Eine Betätigungsstange 134 erstreckt sich parallel zu den Stangen 112 und 114 zwischen diesen durch einen Durchbruch 136 der Traverse 110 nach unten. An der Betätigungsstange 134 sitzt ein doppel-T-förmiges Endstück 138. Das Endstück hat zwei einander entgegengerichtete Arme 140 und 142 mit waagerechten, u-förmigen Ausschnitten 144 bzw. 146. Die Ausschnitte 144 und 146 umgreifen je einen Zapfen 148 bzw. 150 an den inneren Enden der Schenkel 126 bzw. 128 der Greifbacken 118 bzw. 120. Die Betätigungsstange 134 ist mit ihrem oberen Ende an einem Arm 152 eines Winkelhebels 154 angelenkt. Der Winkelhebel 154 ist um eine Schwenkachse 156 schwenkbar an der Traverse 110 gelagert. An dem zweiten Arm 158 des Winkelhebels ist eine Verbindungsstange 160 angelenkt. Das entgegengesetzte Ende der Verbindungsstange 160 ist an einem Betätigungshebel 162 angelenkt, der um eine Achse 164 schwenkbar an der Traverse 110 gelagert ist. Eine Zugfeder 166 ist einerseits an der Traverse 110 und andererseits an der Verbindungsstange 160 angehängt. Die Zugfeder 166 zieht daher die Verbindungsstange nach links in Fig.6. Damit schwenkt sie den Winkelhebel 154 entgegen dem Uhrzeigersinn in Fig.6 und sucht dadurch den Arm 152 und die Betätigungsstange 134 nach oben zu bewegen. Dadurch wird die Greifbacke 118 entgegen dem Uhrzeigersinn und die Greifbacke 120 im Uhrzeigersinn bewegt. Die Zugfeder 166 sucht somit die Greifvorrichtung in Schließstellung zu halten. Die Zugkraft der Zugfeder 166 bestimmt dabei die Andruckkraft. Über den Betätigungshebel 162 kann die Greifvorrichtung gegen die Wirkung der Zugfeder 166 geöffnet werden.

Der untere Querteil 170 des doppel-T-förmigen Endstücks 138 trägt einen Anschlag 172 für die zu greifende Glasplatte 174. Der Anschlag 172 ist von einem Blechstreifen gebildet, der an dem Querteil befestigt ist und dessen Enden nach unten rechtwinklig abgebogen sind und zwei im Abstand voneinander angeordnete, parallele, scharfe Schneiden 176 und 178 bilden. An diese Schneiden 176 und 178 legt sich die Oberkante der Glasplatte 174 an.

An den nach unten ragenden Schenkeln 130 und 132 der Greifbacken 118 bzw. 120 sind Greifstücke 180 bzw. 182 angebracht. Die Greifstücke 180 und 182 sind Blechteile, die ähnlich wie der Anschlag 172 jeweils ein Paar von scharfen Schneiden 184, 186 bzw. 188, 190 bilden.

Die Greifstücke 180 und 182 sind ebenso wie der Anschlag 172 aus schlecht wärmeleitendem Chromstahlblech hergestellt.

Es hat sich gezeigt, daß mit einer so ausgebildeten Greifvorrichtung Glasplatten bei 380° C bequem gegriffen werden können, ohne daß das Glas springt.

Die beschriebene Apparatur wird wie folgt angewandt:

Die Haltekörper 14 und 16 werden durch die Heizelemente 36 beheizt und sind gleichmäßig auf hoher Temperatur von z.B. 380° C. Die Sacklochbohrungen 26 bilden Kammern, die eine Salzschmelze aufnehmen. Ein in die Sacklochbohrungen 26 eingebrachtes Salz bildet eine flüssige Salzschmelze. Die Verdrängungskörper 76 sind durch die Hub- und Senkeinrichtung (Fig.5) angehoben. Der Vorrat an Salzschmelze befindet sich daher im unteren Teil der Sacklochbohrung 26 unterhalb der Zulaufbohrungen bzw. Ablaufbohrungen 38 und 40. Die Hohlräume 22 sind von Salzschmelze frei. In diesem Zustand sind die Haltekörper 14 und 16 auseinandergefahren.

Die Greifvorrichtung (Fig.6) ist angehoben, verschwenkt und wieder abgesenkt, so daß der Griffteil 106 mit der Bohrung 108 auf der Führungssäule 104 geführt ist. Durch Betätigung des Betätigungshebels 162 werden die Greifbacken 118 und 120 geöffnet. Die Greifvorrichtung greift über eine mit einer Maske versehene Glasplatte 174 aus einem Vorrat. Die Greifvorrichtung wird dabei soweit abgesenkt, daß der Anschlag 172 mit seinen Schneiden 176, 178 an der Oberkante der Glasplatte 174 zur Anlage kommt. Dann wird der Betätigungshebel 162 losgelassen. Die Greifbacken 118 und 120 werden durch die Zugfeder 166 einwärts bewegt, bis sich die Schneiden 184, 186 und 188, 190 der Greifstücke 180 und 182 an die Seitenkanten der Glasplatte 174 unter dem Einfluß der Zugfeder 166 anlegen. Die Glasplatte ist jetzt in der Greifvorrichtung gehalten.

Die Greifvorrichtung wird nun mit der Glasplatte 174 angehoben, bis der Griffteil 106 sich über dem oberen Ende der Führungssäule 104 befindet. Dann befindet sich die Glasplatte 174 sicher oberhalb der Oberseite des Gehäuses 12. Die Greifvorrichtung wird verschwenkt, bis der Griffteil 106 mit der anderen Bohrung (wie in Fig.7 dargestellt) auf der Führungssäule 104 nach unten gleiten kann. Die Ausrichtung ist dann so, daß sich die Greifbacken 118, 120 mit der Glasscheibe 174 durch den Schlitz 100 hindurch zwischen die auseinandergefahrenen Haltekörper 14 und 16 bewegt.

Glasscheibe und Greifbacken werden in dieser Position für eine Weile gehalten, bis sich die Glasscheibe 174 und die Greifbacken 118, 120 im wesentlichen durch Strahlungswärme auf die Temperatur der Haltekörper 14 und 16 erwärmt haben. Diese Erwärmung erfolgt gleichmäßig, so daß keine thermischen Spannungen auftreten.

Dann werden die Haltekörper 14 und 16 von den Pneumatikzylindern zusammengefahren, so daß sie die Glasscheibe 174 mit vorgegebenem Druck zwischen sich halten. Die Greifbacken 118 und 120 werden geöffnet und angehoben und geben die Glasplatte 174 frei.

Als nächstes werden die Verdrängungskörper 76 und 78 abgesenkt. Die Verdrängungskörper 76 und 78 verdrängen die Salzschmelze aus dem unteren Teil der Sacklochbohrungen 26. Die Salzschmelze steigt hoch und fließt durch die Zulaufbohrungen 38 und 40 in die unmittelbar an die Oberfläche der Glasplatte angrenzenden Hohlräume 22. Das ist eine an sich bekannte Technik. Es erfolgt dann in üblicher Weise ein feldunterstützter Ionenaustausch in den von der Maske freigelassenen Bereichen. Zwischen die Haltekörper 14 und 16 wird eine Spannung angelegt. Die Haltekörper sind über die Keramikrollen 44 und 46 isoliert gehalten. Zwischen den Schubstangen 52 und 54 und den Haltekörpern 14 bzw. 16 ist ebenfalls eine elektrische Isolation vorgesehen.

Nach der Behandlung der Glasplatte 174 wird die Greifvorrichtung wieder abgesenkt. Die Greifbacken 118 und 120 ergreifen die Glasplatte 174. Dabei legen sich nur der Anschlag 172 und die Greifstücke 180, 182 mit den Schneiden 176,178; 184,186 bzw. 188, 190 an die heiße Glasplatte 174 an. Über diese Schneiden erfolgt praktisch keine Wärmeabfuhr, so daß thermische Spannungen vermieden werden.

Die Verdrängungskörper 76 und 78 werden angehoben. Die Salzschmelze fließt dadurch aus den Hohlräumen 22 über die Zulaufbohrungen bzw. Ablaufbohrungen 38 und 40 in die unteren Abschnitte der Sacklochbohrungen 26 zurück. Die Haltekörper 14 und 16 werden durch die Pneumatikzylinder 48 und 50 wieder auseinandergefahren. Die behandelte Glasplatte 174 wird durch den Schlitz 100 aus dem Gehäuse 12 herausgezogen. Nach gleichmäßigem Abkühlen der Glasplatte 174 wird diese abgelegt. Es kann nun in gleicher Weise eine neue Glasplatte aufgenommen und behandelt werden. Die Haltekörpe 14 und 16 und der Innenraum des wärmeisolierenden Gehäuses 12 werden dabei ständig auf der Betriebstemperatur von z.B. 380° C gehalten.

**Patentansprüche**

1. Verfahren zur Herstellung von optischen Strukturen in planparallelen Platten durch feldunterstützten Ionenaustausch, bei welchem

    (a) die mit einer Maske versehene Platte (174) in vertikaler Anordnung zwischen Haltekörpern (14,16) gehalten wird, die Hohlräume (22) aufweisen, welche zu der Platte (174) hin offen sind und an die Oberfläche der Platte (174) angrenzen,

    (b) die Hohlräume (22) mit einer Salzschmelze gefüllt werden und

    (c) zwischen den Haltekörpern (14,16) eine elektrische Spannung zur Erzeugung eines quer zu der Platte (174) verlaufenden elektrischen Feldes angelegt wird,

**dadurch gekennzeichnet, daß**

    (d) die Haltekörper (14,16) bei aufeinanderfolgender Behandlung verschiedener Platten (174) ständig im beheizten Zustand gehalten werden,

    (e) zum Wechseln aufeinanderfolgender Platten (174) die Salzschmelze aus den offenen Hohlräumen (22) in Kammern (26) in den Haltekörpern (14,16) geleitet wird,

    (f) die Haltekörper (14,16) dann auseinandergefahren werden, wobei die behandelte Platte mittels einer Greifvorrichtung herausgezogen wird

    (g) die zu behandelnde Platte zwischen die auseinandergefahrenen Haltekörper (14,16) gebracht und zunächst ohne Kontakt mit den Haltekörpern (14,16) durch diese Haltekörper aufgeheizt wird,

    (h) nach der Aufheizung der Platte die Haltekörper (14,16) wieder zusammengefahren werden, so daß sie dicht an deren Oberfläche anliegen und die Platte zwischen sich halten, und

    (i) die offenen Hohlräume (22) zur Durchführung des feldunterstützten Ionenaustauschs wieder mit Salzschmelze aus den Kammern (26) gefüllt werden.

2. Vorrichtung zur Durchführung des Verfahrens nach Anspruch 1, enthaltend ein Paar von auseinander- und zusammenfahrbaren Haltekörpern (14,16) mit einander zugewandten planen Halteflächen, in denen ein Hohlraum (22) zur Aufnahme von Salzschmelze gebildet ist, **dadurch gekennzeichnet, daß** die Haltekörper (14,16) durch in den Haltekörpern (14,16) sitzende Heizelemente (36) direkt beheizbar sind.

3. Vorrichtung nach Anspruch 2, **dadurch gekennzeichnet, daß** die Haltekörper (14,16) von einem wärmeisolierenden Gehäuse (12) umgeben sind, das im Bereich zwischen den Haltekörpern (14,16) und quer zu deren Stellrichtung einen Einführschlitz (100) zum Einführen und Herausnehmen der Platten aufweist.

4. Vorrichtung nach Anspruch 3, **dadurch gekennzeichnet, daß** die Haltekörper (14,16) durch eine außerhalb des Gehäuses (12) angeordnete Stellvorrichtung (48,50) über durch die Gehäusewandung hindurchgeführte Übertragungsglieder (52,54) auseinander- und zusammenfahrbar sind.

**5.** Vorrichtung nach Anspruch 3 oder 4, **dadurch gekennzeichnet, daß** die Greifvorrichtung über Schneiden (184,186;188,190) auf gegenüberliegenden Seiten an den Platten (174) angreift.

**6.** Vorrichtung nach Anspruch 5, **dadurch gekennzeichnet, daß**

(a) die Greifvorrichtung zwei L-förmige, symmetrisch zu einer Mittelbene schwenkbar gelagerte Greifbacken (118,120) aufweist,

(b) eine Hubeinrichtung (134,154,160) an ersten, gegeneinander gerichteten Schenkeln (126,128) der Greifbacken (118,120) angreift und

(c) auf den Innenseiten der zweiten Schenkel (130,132) der Greifbacken (118, 120) je ein Paar von parallelen Schneiden (184,186;188,190) angebracht ist.

**7.** Vorrichtung nach einem der Ansprüche 2 bis 6, **dadurch gekennzeichnet, daß** die Kammern von vertikalen, zylindrischen Bohrungen (26) der Haltekörper (14,16) gebildet sind, die mit den Hohlräumen (22) über am unteren Ende der Hohlräume mündende Verbindungskanäle (38,40) in Verbindung stehen und in denen Verdrängungskörper (76,78) auf- und abbeweglich sind.

FIG.1

EP 0 503 278 A1

FIG.3

FIG.4

FIG.2

FIG.5

EP 0 503 278 A1

FIG.7

FIG.6

12

FIG.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN vol. 12, no. 405 (C-539)26. Oktober 1988 & JP-A-63 144 147 ( CANON INC ) 16. Juni 1988 * Zusammenfassung * --- | 1-7 | C03C21/00 G02B6/12 |
| A | EP-A-0 267 588 (SIEMENS AG) * das ganze Dokument * --- | 1-7 | |
| D,A | EP-A-0 326 920 (BODENSEEWERK GERÄTETECHNIK GMBH) * das ganze Dokument * --- | 1-7 | |
| D,A | EP-A-0 356 644 (BODENSEEWERK GERÄTETECHNIK GMBH) * das ganze Dokument * ----- | 1-7 | |
| | | | **RECHERCHIERTE SACHGEBIETE (Int. Cl.5)** C03C G02B |

Der vorliegende Recherchenbericht wurde für alle Patentansprüche erstellt

| Recherchenort | Abschlußdatum der Recherche | Prüfer |
|---|---|---|
| BERLIN | 26 JUNI 1992 | KUEHNE H.C. |